# EUROPÄISCHE PATENTSCHRIFT

(11) **EP 0 479 016 B1**
(45) Veröffentlichungstag und Bekanntmachung des Hinweises auf die Patenterteilung: **17.01.1996**
(21) Anmeldenummer: 91115642.0
(22) Anmeldetag: 14.09.1991
(51) Int. Cl.: B62D 55/10, B62D 55/096

(54) **Gleiskettenfahrzeug**
Endless track vehicle
Véhicule chenille

(30) Priorität: 01.10.1990 DE 4031030; 18.07.1991 DE 4123778
(43) Veröffentlichungstag der Anmeldung: 08.04.1992
(73) Patentinhaber: Krauss-Maffei Aktiengesellschaft, D-80997 München (DE)
(72) Erfinder: Schlegl, Eugen, Ing. grad., W-8038 Gröbenzell (DE); Kotai, Ferenc, Dipl.-Ing., W-8000 München 50 (DE); Zurek, Rudolf, Dr. Dipl.-Ing., W-8038 Gröbenzell (DE)

(56) Entgegenhaltungen:
- DE-A- 2 555 021
- DE-A- 3 720 126
- DE-A- 3 725 920
- FR-A- 592 878
- GB-A- 138 819

## Beschreibung

Die Erfindung betrifft ein Gleiskettenfahrzeug gemäß Oberbegriff des Patentanspruchs 1.

Ein Gleiskettenfahrzeug dieser Art ist aus der DE-OS 37 25 920 bekannt, bei dem das Gleiskettenlaufwerk aus zwei, jeweils an den Seitenwänden der Fahrzeugwanne befestigten Modulen besteht, wobei jeder Modul einen die Laufwerkskomponenten tragenden Laufwerksträger aufweist der an der Seitenwand unter großflächiger Zwischenlage eines schwingungsisolierenden Materials befestig ist. Bei dieser Befestigungsart sind die hohen Belastungswerte zu berücksichtigen, die zum einen über die Laufwerksrollen und zum anderen über die Leitrolle und das Triebrad aufgrund der Spannung der Gleiskette auf den Laufwerksträger übertragen werden und an den Kraftüberleitungsbereichen zur Seitenwand der Fahrzeugwanne eine besonders starke Befestigung erfordern. Auch muß zu diesem Zweck der Laufwerksträger möglichst steif und somit in schwerer Ausführung gefertigt werden.

Der Erfindung liegt daher die Aufgabe zugrunde, bei einem Gleiskettenfahrwerk mit vibrationsentkoppeltem Laufwerk bei Gewährleistung optimaler Beanspruchungsformen für das zwischen Fahrzeugwanne und Laufwerksträger befindliche Elastomermaterial den konstruktiven Aufwand und das Baugewicht zu verringern.

Diese Aufgabe wird gemäß den Merkmalen aus dem Kennzeichen des Patentanspruchs 1 gelöst.

Der Erfindung liegt dabei die Erkenntnis zugrunde, durch Zugkopplung der einander gegenüberliegenden Laufwerksträger die Wirkung der in die Laufwerksträger eingeleiteten Kräfte aufzuheben oder wesentlich zu vermindern.

In einer bevorzugten Ausführungsform sind die beiden Laufwerksträger durch unter der Bodenplatte der Fahrzeugwanne verlaufende Zugstreben miteinander verbunden. Die Wirkung der durch die Laufrollen in die Laufwerksträger eingeleiteten Kräfte, die in deren unteren Bereichen zu gegenläufig gerichteten Momenten führen, wird damit aufgehoben.

Um die Momentenbelastung zu eliminieren, die über das Leitrad und das Triebrad aufgrund der nach innen gerichteten Gleiskettenspannung in den Laufwerksträger eingeleitet wird, werden an der Front- und/oder Heckwand der Fahrzeugwanne die beiden Laufwerksträger verbindende Zugstreben angeordnet.

Vorzugweise werden bei einem Gleiskettenfahrzeug mit über Drehstäbe abgefederten Laufrollen, die Drehstäbe gleichzeitig auch als Zugstäbe zur Kopplung der beiden Laufwerksträger verwendet.

Vorteilhafterweise ist in dem von den Laufrollen, den Tragrollen sowie dem Leitrad und dem Triebrad umgrenzten Raum innerhalb der Gleiskettenabmessungen der Laufwerksträger mit einer Versteifung versehen, wodurch dieser eine höhere Biegesteifigkeit erhält, die insbesondere einer Verformung des Laufwerkträgers durch am Leitrad und am Triebrad angreifende Kräfte der unter Zugspannung stehenden Gleiskette entgegenwirkt. Die Versteifung, die vorzugsweise als geschlossener Kastenträger ausgebildet ist, ist besonders zur Abstützung von weiteren Laufwerkselementen, wie z.B. Stoßdämpfern und Endanschlagdämpfern geeignet, da deren Lagerung nicht mehr fliegend, d.h. einseitig an der im wesentlichen senkrechten Seitenwand bzw. Trägerplatte des Laufwerksträgers vorgenommen werden muß, sondern beidseitig abgestützt werden kann.

Da auf Grund der Kopplung der Laufwerksträger durch die Zugstangen die Momentenbelastung weitgehend entfällt, die sich ansonsten im unteren Bereich der Laufwerksträger aufgrund der über die Laufrollen und die Tragarme eingeleiteten Kräfte einstellt, ergeben sich verbesserte Belastungsverhältnisse. Es reichen somit lediglich punktförmige Lager aus elastomerem, schwingungsdämpfenden Material aus, um die Differenzkräfte aufzunehmen, die aus unterschiedlicher Momentenbelastung der beiden Laufwerksträger herrühren.

Die Befestigung lediglich über punktförmige Lager bietet zudem eine günstigere Dämpfungswirkung als eine großflächige Verbindung von Laufwerksträger und Seitenwand mit elastomerem Material.

Die Erfindung ist nachfolgend anhand der Zeichnung näher beschrieben.

Es zeigen:
- Fig. 1: in schematischer Darstellung den Querschnitt durch ein Gleiskettenfahrzeug mit Laufwerksträgern, die unter der Bodenplatte der Fahrzeugwanne mit Zugstreben gekoppelt sind,
- Fig. 2: den Querschnitt durch ein Gleiskettenfahrzeug gemäß Fig. 1, jedoch mit den Drehstabfedern des Laufwerks als Zugstreben,
- Fig. 3: in schematischer Darstellung die Draufsicht auf die Fahrzeugwanne mit an einer Seite dargestelltem Triebrad und Leitrad,
- Fig. 4: die Detailansicht der vom Fahrzeuggetriebe durch die Seitenwand der Fahrzeugwanne zum Triebrad führenden Antriebswelle,
- Fig. 5: die Detailansicht der durch die Seitenwand der Fahrzeugwanne führenden Drehstabfeder,
- Fig. 6: die Detailansicht des im Laufwerkträger gelagerten Stoßdämpfers und,
- Fig. 7: die Detailansicht des im Laufwerkträger und in seiner kastenförmigen Versteifung gelagerten Tragarmgehäuses.

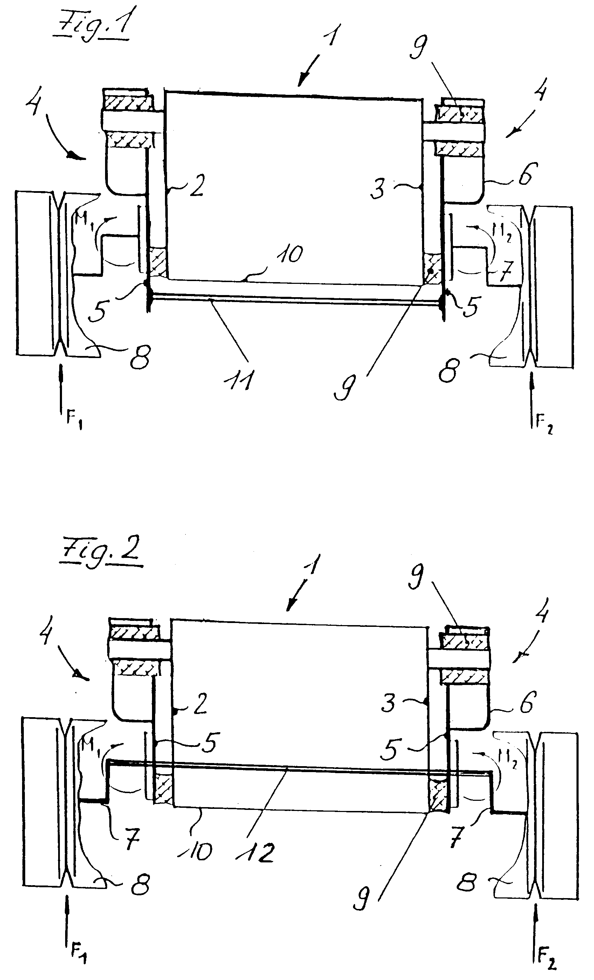

Die Fig. 1 zeigt die Fahrzeugwanne 1 eines Gleiskettenfahrzeugs, an deren Seitenwänden 2 und 3 ein linkes und ein rechtes Gleiskettenlaufwerk angeordnet sind. Jedes Gleiskettenlaufwerk besteht aus einem Laufwerksträger 4 der sich aus einer Trägerplatte 5 und einer Versteifung in Form eines Kastenprofils 6 zusammensetzt. Am Laufwerksträger sind über Tragarme 7 Laufrollen 8 angeordnet. Die Laufwerksträger 4 sind an den Seitenwänden 2 und 3 über im wesentlichen punktförmige Lager 9 befestigt, die aus elastomerem, schwingungsdämpfenden Material bestehen. Die an den Seitenwänden 2 und 3 angeordneten Laufwerksträger 4 sind über unterhalb der Bodenplatte 10 der Fahrzeugwanne 1 verlaufende Zugstreben 11 miteinander verbunden.

Im Stand sowie im Fahrbetrieb werden über die Laufrollen 8 und die Tragarme 7 Momente M₁ und M₂ in den unteren Bereich der Laufwerksträger 4 eingeleitet, die sich jedoch aufgrund der Kopplung der beiden gegenüberliegenden Laufwerksträger durch die Zugstreben 11 nicht in Kräfte auswirken können, die zur Ablösung der Laufwerksträger 4 von den Seitenwänden 2 und 3 führen. Die punktförmigen Lager 9 sind lediglich zur Aufnahme der aus der Differenz der Momente M₁ und M₂ herrührenden Kräfte zu dimensionieren und haben im Hinblick auf die Absorbierung von im Gleiskettenlaufwerk entstehenden Schwingungen günstigere Eigenschaften.

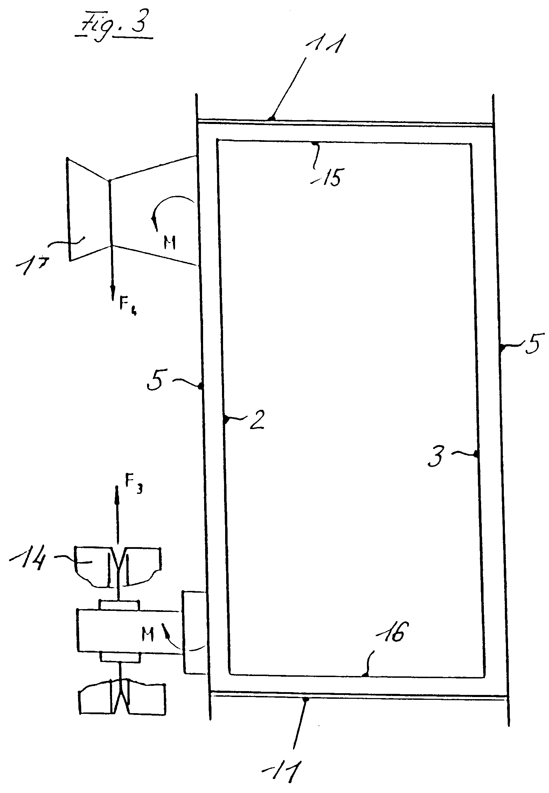

Das Gleiskettenfahrzeug nach Fig. 2 entspricht im wesentlichen dem Gleiskettenfahrzeug nach Fig. 1, weist jedoch Zugstreben 12 auf, die gleichzeitig als Drehstabfedern zur Abfederung der Laufrollen 8 dienen.

Das Gleiskettenfahrzeug nach Fig. 3 zeigt einen linken Laufwerksträger 4 mit einem vorderen Leitrad 13 und einem hinteren Triebrad 14. Mit den Pfeilen F₃ und F₄ ist die Kettenzugkraft angedeutet, die im vorderen und im hinteren Bereich zu Kräften führen, die ein Ablösen der Laufwerksträger 4 in diesen Bereichen von der Seitenwand 2 bewirken würden, wenn diese Kräfte nicht durch mit dem gegenüberliegenden Laufwerksträger verbundene Zugstreben 11 kompensiert werden. Diese Zugstreben 11 verlaufen vor der Frontwand 15 und der Heckwand 16 der Fahrzeugwanne.

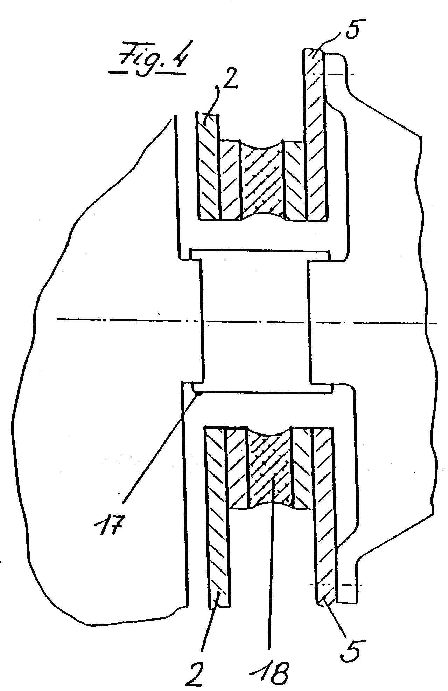

Die Fig. 4 zeigt in einem Detailausschnitt die Durchführung der Antriebswelle 17 für das Triebrad 14 durch eine Seitenwand der Fahrzeugwanne 1 und die Trägerplatte 5, wobei zwischen Trägerplatte 5 und Seitenwand ein Ringelement 18 aus elastomerem Material angeordnet ist, das ein ringförmiges Stützelement darstellt und durch das die Durchbrechung der Seitenwand der Fahrzeugwanne 1 abgedichtet ist.

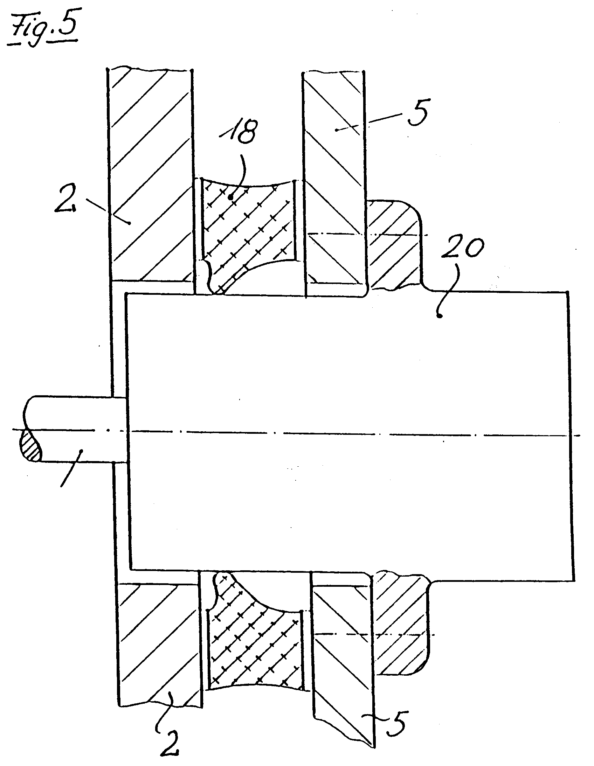

In ähnlicher Weise ist der in Fig. 5 dargestellte Durchtritt der Drehstabfedern durch die Seitenwand 2 oder 3 und durch die Trägerplatte 5 des Laufwerkträgers 4 gestaltet, wobei ebenfalls zwischen Seitenwand 2 und Trägerplatte 5 ein abdichtendes Ringelement 18 aus elastomerem Material angeordnet ist.

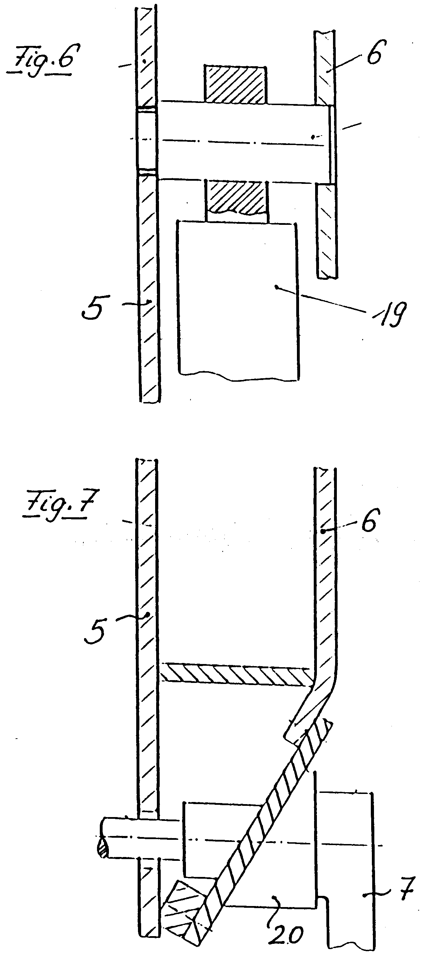

Die Fig. 6 zeigt im Detailausschnitt die zweifach abgestützte Lagerung eines Stoßdämpfers 19 in der Trägerplatte 5 und in einer zur Trägerplatte 5 parallelen Wandung des Kastenprofils 6.

Die Fig. 7 zeigt im Detailausschnitt den Laufwerksträger 4, bestehend aus der Trägerplatte 5 und dem aufgesetzten Kastenprofil 6, wobei im unteren Bereich des Laufwerksträgers 4 das Tragarmgehäuse 20 für den Tragarm 7 und die zugehörige Drehstabfeder für eine Laufrolle 8 angeordnet ist. Durch die verbindende Befestigung des Tragarmgehäuses 20 an der Trägerplatte 5 und am aufgesetzten Kastenprofil 6 wird eine Steigerung der Steifigkeit des Laufwerträgers 4 erzielt.

## Patentansprüche

1. Gleiskettenfahrzeug mit einer Fahrzeugwanne (1) und je einem an den beiden Seitenwänden (2 und 3) der Fahrzeugwanne (1) angeordneten Gleiskettenlaufwerk, dessen Laufwerkskomponenten, wie das Leitrad (13), die Laufrollen (8) mit Tragarmen (7), die Stützrollen und das mit der Gleiskette in Eingriff stehende Triebrad (14) auf einem Laufwerksträger (4) angeordnet sind, der unter Zwischenlage schwingungsdämpfender Materialien an jeweils einer Seitenwand (2,3) der Fahrzeugwanne (1) befestigt ist, **dadurch gekennzeichnet,** daß die Laufwerksträger (4) lediglich über im wesentlichen punktförmige Lager (9) aus schwingungsdämpfenden Material an den Seitenwänden (2,3) der Fahrzeugwanne (1) befestigt sind und miteinander über Zugstreben (11,12) verbunden sind.

2. Gleiskettenfahrzeug nach Anspruch 1, **dadurch gekennzeichnet,** daß die Zugstreben (11) unter oder über der Bodenplatte (10) der Fahrzeugwanne (1) quer zur Fahrzeuglängsachse angeordnet sind.

3. Gleiskettenfahrzeug nach einem der Ansprüche 1 oder 2, **dadurch gekennzeichnet,** daß die Zugstreben (11) waagrecht und parallel zur Heckwand (16) der Fahrzeugwanne (1) angeordnet sind.

4. Gleiskettenfahrzeug nach einem der Ansprüche 1 bis 3, **dadurch gekennzeichnet,** daß die Zugstreben (11) waagrecht und parallel zur Frontwand (15) der Fahrzeugwanne (1) angeordnet sind.

5. Gleiskettenfahrzeug nach einem der Ansprüche 1 bis 4, **dadurch gekennzeichnet,** daß bei einem Gleiskettenlaufwerk, bei dem die die Laufrollen (8) tragenden Tragarme (7) mittels quer über oder unter der Bodenplatte (10) der Fahrzeugwanne (1) verlaufenden Drehstabfedern abgestützt sind, eine oder mehrere der Drehstabfedern die Zugstreben (12) sind.

6. Gleiskettenfahrzeug nach einem der Ansprüche 1 bis 5, **dadurch gekennzeichnet,** daß eine Öffnung in der Seitenwand (2,3), durch die die Antriebswelle (17) für das Triebrad (14) geführt ist, von einem zwischen der Seitenwand (2,3) und dem Laufwerksträger (4) angeordneten Ringelement (18) aus elastomerem Material umschlossen ist, das ein der punktförmigen Lager (9) darstellt.

7. Gleiskettenfahrzeug nach einem der Ansprüche 1 bis 6, **dadurch gekennzeichnet,** daß bei Durchbrüchen in der Seitenwand (2,3) durch die die Drehstabfedern der Laufrollen (8) geführt sind, die Durchbrüche von jeweils zwischen der Seitenwand (2,3) und dem Laufwerksträger (4) angeordneten Ringelementen (18) aus elastomerem Material umschlossen sind, die die punktförmigen Lager (9) darstellen.

8. Gleiskettenfahrzeug nach einem der Ansprüche 1 bis 7, **dadurch gekennzeichnet,** daß der Laufwerksträger (4) im wesentlichen aus einer zur Seitenwand (2,3) parallelen Trägerplatte (5) besteht, die in dem Raum, der in der Höhenerstreckung durch die Laufrollen (8) und die Tragrollen und in der Längserstreckung durch das Leitrad (13) und das Triebrad (14) begrenzt ist, eine Versteifung in Form eines tunnelförmigen, im wesentlichen geschlossenen Kastenprofils (6) aufweist.

9. Gleiskettenfahrzeug nach Anspruch 8, **dadurch gekennzeichnet,** daß in der Versteifung die Lagerung von Fahrwerkszusatzkomponenten, wie z.B. Stoßdämpfer (19), Kettenspanner oder Endanschlagdämpfer angeordnet ist.

10. Gleiskettenfahrzeug nach einem der Ansprüche 8 oder 9, **dadurch gekennzeichnet,** daß die Tragarmgehäuse (20) der Tragarme (7) sowohl an der Trägerplatte (5) als auch an der Versteifung des Laufwerksträgers (4) abgestützt sind.

## Claims

1. A tracked vehicle with a vehicle trough (1) and a track-laying assembly (4) disposed at the two side walls (2, 3) of the vehicle trough (1), the components of the track-laying assemblies, such as the guiding sprocket (13), the track rollers (8) with supporting arms (7), the supporting rolls and the driving wheel (14) which is in engagement with the track, being arranged on supports (4) mounted with intermediate layers of vibration clamping materials on the side walls (2, 3) of the vehicle trough (1);
characterised in that the track-laying assemblies (4) are connected to the side walls (2, 3) of the vehicle trough (1) only through essentially punctiform bearings (9) made of vibration clamping material, and are connected to each other via diagonal members (11, 12).

2. A vehicle according to claim 1, characterised in that the diagonal members (11) are arranged below or over the base plate (10) of the vehicle trough (1) transversely to the longitudinal axis of the vehicle.

3. A vehicle according to claims 1 or 2, characterized in that the diagonal members (11) are arranged horizontally and parallel to the rear wall (16) of the vehicle trough (1).

4. A vehicle according to one of the claims 1 to 3, characterized in that the diagonal members (11) are arranged horizontally and parallel to the front wall (15) of the vehicle trough (1).

5. A vehicle according to one of the claims 1 to 4, characterized in that each track-laying assembly (4) has the supporting arms (7) carrying the track rollers (8) supported by means of torsion bar springs extending transversely over or below the base plate (10) of the vehicle trough (1) and one or more of the torsion bar springs are the diagonal members (12).

6. A vehicle according to one of the claims 1 to 5, characterised in that an opening in the side wall (2, 3) through which the driving shaft (17) for the driving wheel (14) is guided, is surrounded by an annular element (18) of elastomeric material arranged between the side wall (2, 3) and the assembly support (4) and constitutes one of the punctiform bearings (9).

7. A vehicle according to one of the claims 1 to 6, characterized in that openings in the side walls (2, 3), through which the torsion bar springs of the track rollers (8) are guided, are respectively surrounded by elastomeric annular elements (18) arranged between the side wall (2, 3) and the support assembly (4) and constitute the punctiform bearings (9).

8. A vehicle according to one of the claims 1 to 7, characterized in that the assembly (4) essentially consists of a support plate (5) parallel to the side wall (2, 3), the support plate (5) comprising a stiffening in the form of a tunnel shaped, essentially closed box profile (6) the space in which, in its height extension, is limited by the front rollers (8) and the support rolls, and in its longitudinal extension, is limited by the guiding sprocket (13) and the drive wheel (14).

9. A vehicle according to claim 8, characterized in that in the stiffening the storage of additional vehicle components as for example, shock absorbers (19), track tensioners or limit stop dampers is arranged.

10. A vehicle according to one of the claims 8 or 9, characterized in that the support arm housings (20) of the support arm (7) are supported at the support plate (5) as well as at the stiffening of the assembly support (4).

## Revendications

1. Véhicule à chenilles comportant un châssis-baquet (1) et, disposé sur chacune des deux parois latérales (2 et 3) du châssis-baquet (1) du véhicule, un train de roulement à chenilles dont les composants du train de roulement, comme le galet de renvoi (13), les galets de roulement (8) avec des bras porteurs (7), les galets d'appui et le barbotin (14), qui engrène avec la chaîne du train de roulement, sont disposés sur un porte-train de roulement (4) dont chacun est fixé sur une paroi latérale (2, 3) du châssis-baquet (1) du véhicule avec interposition de matériaux amortissant les vibrations, caractérisé par le fait que les porte-train de roulement (4) ne sont fixés aux parois latérales (2, 3) du châssis-baquet (1) du véhicule que par l'intermédiaire de supports sensiblement ponctuels (9) en matériau absorbant les vibrations et sont réunis l'un à l'autre par l'intermédiaire de tirants (11, 12).

2. Véhicule à chenilles selon la revendication 1, caractérisé par le fait que les tirants (11) sont disposés au-dessous ou au-dessus de la plaque de fond (10) du châssis-baquet (1) du véhicule, perpendiculairement à l'axe longitudinal du véhicule.

3. Véhicule à chenilles selon l'une des revendications 1 ou 2, caractérisé par le fait que les tirants (11) sont disposés horizontalement et parallèlement à la paroi arrière (16) du châssis-baquet (1) du véhicule.

4. Véhicule à chenilles selon l'une des revendications 1 à 3, caractérisé par le fait que les tirants (11) sont disposés horizontalement et parallèlement à la paroi avant (15) du châssis-baquet (1) du véhicule.

5. Véhicule à chenilles selon l'une des revendications 1 à, 4, caractérisé par le fait que dans le cas d'un train de roulement à chenilles dans le cas duquel les bras porteurs (7), portant les galets de roulement (8), sont soutenus au moyen de barres de torsion qui passent perpendiculairement, au-dessus ou au-dessous de la plaque de fond (10) du châssis-baquet (1) du véhicule, une ou plusieurs des barres de torsion sont en même temps les tirants (12).

6. Véhicule à chenilles selon l'une des revendications 1 à 5, caractérisé par le fait qu'une ouverture dans la paroi latérale (2, 3), par laquelle passe l'arbre de transmission (17) pour le barbotin (14), est entourée d'un élément annulaire (18) en matériau élastomère, disposé entre la paroi latérale (2, 3) et le porte-train de roulement (4), qui représente l'un des supports ponctuels (9).

7. Véhicule à chenilles selon l'une des revendications 1 à 6, caractérisé par le fait que dans le cas de découpes dans la paroi latérale (2, 3) par lesquelles passent les barres de torsion des galets de roulement (8), ces découpes sont chacune entourées d'éléments annulaires (8) en matériau élastomère qui sont disposés entre la paroi latérale (2, 3) et le porte-train de roulement (4) et représentent les supports ponctuels (9).

8. Véhicule à chenilles selon l'une des revendications 1 à 7, caractérisé par le fait que le porte-train de roulement (4) est essentiellement constitué d'une plaque porteuse (5) qui est parallèle à la paroi latérale (2, 3) et qui, dans l'espace limité, en extension en hauteur, par les galets de roulement (8) et les galets porteurs et, en extension longitudinale, par le galet de renvoi (13) et la barbotin (14), présente un renfort sous forme d'un profilé en caisson (6), en forme de tunnel, essentiellement clos.

9. Véhicule à chenilles selon la revendication 8, caractérisé par le fait que dans le renfort est disposée la portée de composants supplémentaires du véhicule, comme par exemple amortisseurs de choc (19), tendeurs de chaîne ou amortisseurs de butée.

10. Véhicule à chenilles selon l'une des revendications 8 ou 9, caractérisé par le fait que les carters (20) des bras porteurs (7) s'appuient aussi bien sur la plaque porteuse (5) que sur le renfort du porte-train de roulement (4).
